Europäisches Patentamt

European Patent Office

Office européen des brevets

(11) Veröffentlichungsnummer: **0 166 813**
**B1**

## (12) EUROPÄISCHE PATENTSCHRIFT

(45) Veröffentlichungstag der Patentschrift: 29.08.90

(21) Anmeldenummer: 84114164.1

(22) Anmeldetag: 23.11.84

(51) Int. Cl.⁵: **H 02 H 7/16**

(54) Überwachungseinrichtung.

(30) Priorität: 29.06.84 DE 3424082

(43) Veröffentlichungstag der Anmeldung:
08.01.86 Patentblatt 86/02

(45) Bekanntmachung des Hinweises auf die
Patenterteilung:
29.08.90 Patentblatt 90/35

(84) Benannte Vertragsstaaten:
DE GB SE

(56) Entgegenhaltungen:
EP-A-0 040 766
EP-A-0 040 768
DE-B-1 243 778

(73) Patentinhaber: Siemens Aktiengesellschaft
Wittelsbacherplatz 2
D-8000 München 2 (DE)

(72) Erfinder: Becker, Michael, Dipl.-Ing.
Ringstrasse 50
D-8525 Uttenreuth (DE)
Erfinder: Renz, Klaus, Dipl.-Ing.
Steinacherstrasse 23
D-8500 Nürnberg (DE)

Courier Press, Leamington Spa, England.

**Beschreibung**

Die Erfindung betrifft eine Überwachungseinrichtung nach dem Oberbegriff des Anspruchs 1.

Von der allgemeinen Forderung nach Erfassung von inneren Fehlern netzgespeister elektrischer Schützlinge, die aus induktiven, kapazitiven und ohmschen Elementen aufgebaut sind, wird gemäß der DE—OS 30 20 128 der Kurzschluß von Kondensatoren einer Kondensatorbatterie mit einer Anzahl parallelgeschalteter und querverbundener Stränge sowie die Abschaltung von Strängen durch Ansprechen einer Sicherung unterschiedslos nur nach der Anzahl von solchen inneren Fehlern erfaßt und nach ihrer zeitlichen Reihenfolge getrennt gemeldet. So werden z.B. der erste Fehler in Gestalt eines defekten Kondensators in gleicher Weise und mit der gleichen ersten Meldevorrichtung, der zweite Fehler einer der beiden Arten mit einer zweiten Meldevorrichtung angezeigt usw. und dem Bedienungspersonal vielfach die Entscheidung gelassen, ob und ab welcher Meldung eventuell eine Abschaltung vom Netz vorgenommen werden soll oder bei Auftreten von mehr als einem Fehler eine automatische Abschaltung des Schützlings erfolgen soll. Bei der bekannten Überwachungseinrichtung werden die üblicherweise vorhandenen Strom- und Spannungswandler für die Überwachungseinrichtung benutzt und dabei das sogenannte "Beobachter-Prinzip" angewendet, bei dem der Schützling mit einer elektronischen "Nachbildung" unter Berücksichtigung des betreffenden Ersatzschaltbildes des Schützlings verglichen wird. Bei einer durch Alterungseinflüsse, Temperatureinflüsse und sonstigen normalen äußeren Einflüssen langsam auftretenden Veränderung der elektrischen Betriebswerte des Schützlings kann die Nachbildung nachgeführt werden, so daß die Veränderungsauswirkungen kompensiert werden. Um sprunghafte Änderungen im Zustand des Schützlings durch innere Fehler erfassen zu können, werden die markanten Betriebsgrößen (Originalgrößen) des Schützlings mit entsprechenden Größen der elektronischen Nachbildung (Modellgrößen) nach Ausfilterung der jeweiligen Grundschwingungen und Umwandler dieser Grundschwingungen der Originalgrößen und der Modellgrößen in amplitudenproportionale geglättete Original- bzw. Modell-Gleichgrößen in einer als nichtlinearer Regler arbeitenden transienten Vergleichseinrichtung miteinander verglichen und die bei inneren Fehlern auftretenden Differenzen am Ausgang der transienten Vergleichseinrichtung ohne Rücksicht auf ihre Richtung in Grenzwertstufen ausgewertet für die Erfassung von Fehlern unterschiedlicher Art und Meldung der ersten, zweiten und eventuell folgenden Fehler durch gesonderte Meldeorgane, wobei bei Auftreten mehrerer Fehler auch eine automatische Abschaltung des Schützlings erfolgen kann. Sowohl die Abschaltung von Hand aufgrund von Meldungen nur über die Anzahl von Fehlern ohne Unterscheidungsmöglichkeiten der Art der Fehler als auch die automatische Abschaltung der Schützlinge bei Auftreten einer bestimmten Zahl von u.U. unterschiedlichen Fehlern kann nicht verhindern, daß entweder eine zu frühe Abschaltung bei an sich unschädlichen Fehlern oder eine zu späte Abschaltung bei gefährlichen Fehlern im Schützling erfolgt.

Die bekannte Überwachungseinrichtung für Kondensatorbatterien arbeitet auch bei schnellen und starken Änderungen der Eingangs spannung. Eine Überwachung anderer Schützlinge, wie z.B. LC-Filterkreise, elektrische Maschinen oder Geräte ist nicht vorgesehen.

Der Erfindung liegt die Aufgabe zugrunde, eine Überwachungseinrichtung der eingangs genannten Art allgemein für elektrische Schützlinge aus kapazitiven, induktiven und/oder ohmschen Bauelementen zu schaffen, bei der nicht nur die Zahl von Fehlern, sondern darüber hinaus auch die Art der Fehler erfaßbar und in Abhängigkeit von Zahl und Art der Fehler selektive Maßnahmen zur Meldung und gegebenenfalls zur selbsttätigen Auslösung des Netzschalters der Schutzeinrichtung wirksam werden.

Die Lösung der gestellten Aufgabe gelingt mit den kennzeichnenden Maßnahmen des Anspruchs 1.

Eine besonders vorteilhafte Ausgestaltung der Erfindung ermöglicht die Anwendung der gleichen Überwachungseinrichtung sowohl für Kondensatorbatterien als auch für Kondensatorbatterien enthaltende LC-Filterkreise. Wesentlich für alle Arten von Schützlingen ist die bekannte Bereitstellung zweier miteinander zur vergleichender Zwischenkreise, von denen jeweils nur in einem Zwischenkreis eine elektronische Nachbildung des Schützlings vorgesehen ist, damit in der transienten Vergleichseinrichtung stets eine elektrische Originalgröße mit der entsprechenden Modellgröße verglichen werden kann und die Differenz mehreren nach Größe und Richtung unterschiedlich ansprechenden Grenzwert-, Melde- und Auslösestufen zugeführt wird.

Anstelle der den einzelnen Kondensatoren in den Strängen vorgeschalteten Sicherungen können den einzelnen Kondensatorwickeln innerhalb jedes Kondensators Sicherungen zugeordnet sein. Durch die Querverbindungen der Stränge zwischen den in Reihe liegenden Kondensatoren entstehen Kondensatorzeilen.

In der Zeichnung ist ein Ausführungsbeispiel der Erfindung näher erläutert, das als Überwachungseinrichtung auf eine Kondensatorbatterie oder einen LC-Filterkreis als Schützling umschaltbar ist und die selektive Erfassung unterschiedlicher innerer Fehler gestattet. Es zeigen

Fig. 1 ein vereinfachtes Blockschaltbild für eine umschaltbare Überwachungseinrichtung,

Fig. 2 ein Ersatzschaltbild für einen LC-Filterkreis,

Fig. 3 eine elektronische Nachbildung für einen LC-Filterkreis, die umschaltbar ist auf eine Nachbildung einer Kondensatorbatterie allein,

Fig. 4 mögliche unterschiedliche Fehlerarten für einen LC-Filterkreis mit einer Kondensatorbatterie aus zwei getrennten, isoliert aufgestellten Teilkondensatorbatterien.

Durch Fehler in den Kondensatorbatterien tritt eine Reaktanzänderung $\Delta X$ ein, deren Richtung nur in der Reaktanzachse verläuft.

Solche Reaktanzänderungen $\Delta X$ sind entweder positiv bei $\Delta X > 0$ oder negativ bei $\Delta X < 0$, wobei deren unterschiedliche Größe durch $<$, $\ll$ usw. oder $>$, $\gg$ usw. angedeutet sind.

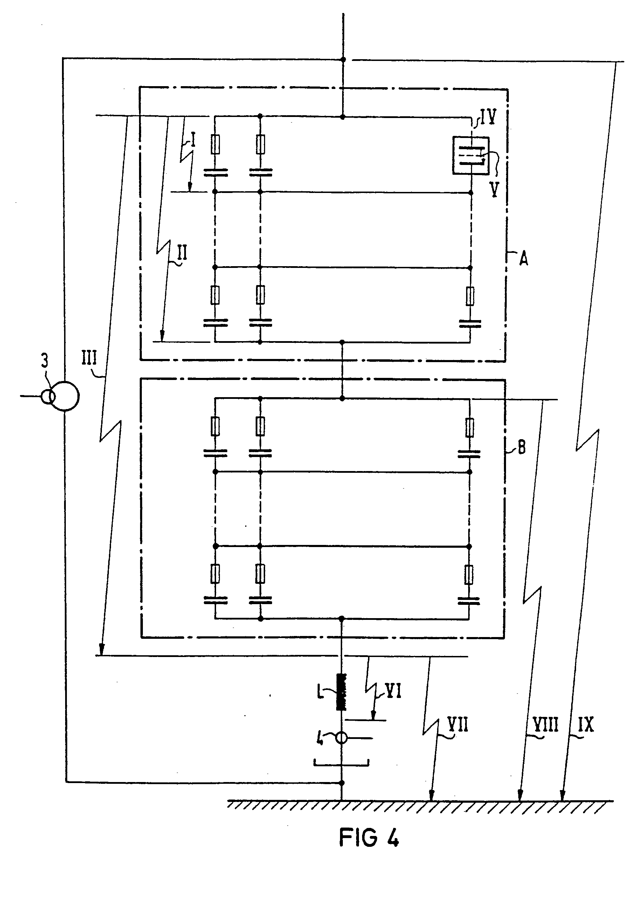

Die in Fig. 4 am Beispiel eines LC-Filterkreises gezeigten Fehlerfälle I bis IX und die ihnen entsprechenden Reaktanzänderungen sind in nachfolgender Tabelle zusammengefaßt.

| Fehler | Fehlerart | Reaktanzänderung | |
|--------|-----------|------------------|---|
| I | Zeilenkurzschluß | $\Delta X \ll 0$ | |
| II | Tischkurzschluß (A) | $\Delta X \lll 0$ | |
| III | Tischkurzschluß (B) | $\Delta X \lll\!< 0$ | |
| IV | Abtrennung von Kondensatoren | $\Delta X > 0$ | |
| V | innerer Kondensatorkurzschluß | $\Delta X < 0$ | |
| VI | Drosselkurzschluß | $\Delta X < 0$ | |
| VII | Drosselerdschluß | $\Delta X < 0$ | Stromwandler 4 überbrückt |
| VIII | Tischerdschluß (B) | $\Delta X \lll 0$ | |
| IX | Tischerdschluß (A) | $\Delta X = -X_{gesamt}$ | |

So unterscheiden sich die Fehler I, II, III, V und VI mit negativer Reaktanzänderung im Betrag ausreichend voneinander und von dem Fehler IV durch die andere Richtung. Die Fehler VII bis IX weisen als gemeinsames Kriterium den Ausfall des Strommeßwertes auf.

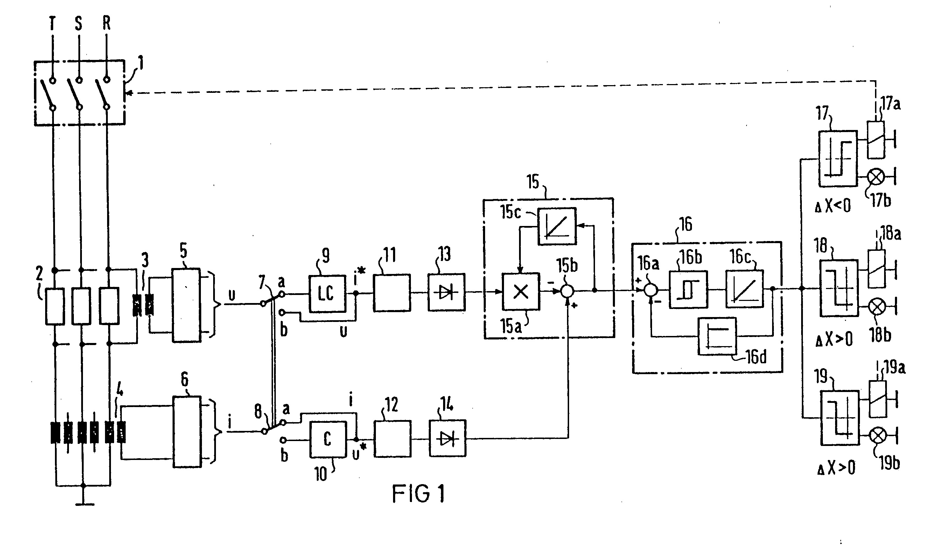

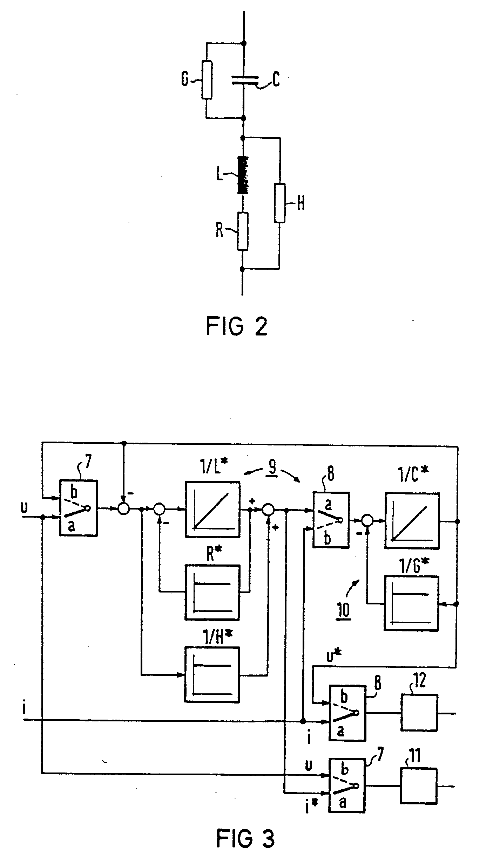

An ein Drehstromnetz ist über einen Netzschalter 1 ein dreiphasiger Schützling 2, und zwar entweder ein LC-Filterkreis oder eine Kondensatorbatterie, mit einem Ersatzschaltbild nach Fig. 2 in Sternschaltung angeschlossen, wobei der Sternpunkt auch geerdet sein kann. In jeder Phase ist—wie für die Phase R gezeigt—eine Überwachungseinrichtung nach Fig. 1 mit elektronischen Nachbildungen 9, 10 des Schützlings 2 gemäß Fig. 2 und 3 vorgesehen, die zwei auf eine transiente Vergleichseinrichtung 15 geführte Zwischenkreise enthält. Von einem den Spannungsabfall am Schützling 2 erfassenden Meßwandler 3 wird über einen Trennwandler 5 die auf Elektronikpotential transformierte Spannung über einen Umschalter 7 entweder einer elektrischen Nachbildung 9 des Schützlings 2 als LC-Filterkreis (Stellung 7a) oder direkt (Stellung 7b) auf einen nachgeordneten Siebfilter 11 zur Ausfilterung der Grundschwingung bei Unterdrückung der Oberschwingungen gegeben, dessen ausgangsseitige Oberschwingung in einem gleichrichtenden und glätenden Betragsbildner 13 in eine der Amplitude der Grundschwingung proportionale Gleichgröße umgewandelt wird. Der Strom in jeder Phase des Schützlings 2 wird durch einen Meßwandler 4 erfaßt und über einen dem Trennwandler 5 entsprechenden Trennwandler 6 über einen Umschalter 8 entweder auf eine elektronische Nachbildung 10 für eine Kondensatorbatterie (Stellung 8b) oder direkt (Stellung 8a) auf einen Siebfilter 12 und dessen Ausgang auf einen glättenden Betragsbildner 14 (entsprechend Betragsbildner 13) gegeben.

Die Gleichgröße am Ausgang von 13 wird einem Multiplizierer 15a der transienten Vergleichseinrichtung 15, die Gleichgröße am Ausgang von 14 einer Differenzstufe 15b zugeführt und die Differenzgröße über einen Integrator 15c auf den zweiten Eingang des Multiplizierers geführt. Die Wirkungsweise der Vergleichseinrichtung 15 ist aus der eingangs genannten DE—OS 30 20 128 bekannt. Es ist aus der Fig. 1 bezüglich der Stellungen der Umschalter 7, 8 erkennbar, daß eine der Originalgrößen u bzw. i stets mit einer der Modellgrößen i* bzw. u* verglichen wird. Damit nur kurzzeitig auftretende Störungen zu keiner unnötigen Erfassung von Fehlern führen, ist der Vergleichsanordnung 15 ein bekanntes, zeitverzögert ansprechendes Zeitglied 16 mit einer Differenzstufe 16a, einem Trigger 16b, einem Integrator 16c und einem Proportionalverstärker 16d nachgeordnet und mit dessen Ausgang sind sterngeschaltete, nach Betrag und Richtung unterschiedlich eingestellte Grenzwert- und Zählstufen 17, 18, 19 verbunden, die jeweils ein Meldeorgan 17b, 18b, 19b sowie Auslöseglieder (Relais) 17a, 18a, 19a betätigen und über die letzteren eine fehlerartabhängige notwendige automatische Auslösung des Netzschalters bewirken.

# EP 0 166 813 B1

## Patentansprüche

1. Überwachungseinrichtung für wechsel- oder drehstromnetzbetriebene elektrische Schützlinge (2) zur Auswertung von Impedanzänderungen bedingenden inneren Fehlern, wozu je Phase (R, S, T) jeein meßwandlergespeister (3, 4), vom Spannungsabfall am Schützling (2) abhängiger Zwischenkreis (5, 7, 9, 11, 13) und ein vom Strom im Schützling (2) abhängiger Zwischenkreis (6, 8, 10, 12, 14) zum Ausfiltern der Grundschwingungen und Umwandeln derselben in amplitudenproportionale Gleichgrößen vorgesehen ist, mit einer Nachbildung (9; 10) des Schützlings (2) in einem Zwischenkreis, wobei beide Zwischenkreise mit einem nichtlinearen Regler als transiente Vergleichsschaltung (15) verbunden sind, deren Ausgangsgröße mehreren betragsabhängig ansprechenden Grenzwert- und Zählstufen (17, 18, 19) eines Melde- (17b, 18b, 19b) und Auslösekreises (17a, 18a, 19a) für einen Netzschalter (1) zugeführt ist, dadurch gekennzeichnet, daß die Grenzwert- und Zählstufen (17, 18, 19) zusätzlich abhängig von der Richtung der Impedanzänderungen, insbesondere der Richtung in der Reaktanzachse, sind, auf unterschiedliche Beträge und Richtungen ansprechend eingestellt und eingangsseitig sterngeschaltet sind, so daß unterschiedliche innere Fehler des Schützlings (2) selektiv erfaß- und auswertbar sind.

2. Überwachungseinrichtung nach Anspruch 1 für LC-Filterkreise oder Kondensatorbatterien mit einer Anzahl paralleler, querverbundener Stränge aus jeweils einer Anzahl in Reihe liegender Kondensatoren, dadurch gekennzeichnet, daß in dem spannungsabhängigen Zwischenkreis (5, 7, 9, 11, 13) eine den LC-Filterkreis nachbildende überbrückbare (7b) elektronische Nachbildung (9) und in dem vom Strom abhängigen Zwischenkreis (6, 8, 10, 12, 14) eine die Kondensatorbatterie nachbildende überbrückbare (8a) elektronische Nachbildung (10) vorgesehen ist, von denen betriebsmäßig nur jeweils eine elektronische Nachbildung eingeschaltet ist.

3. Überwachungseinrichtung nach Anspruch 1 oder 2, dadurch gekennzeichnet, daß die eingangsseitig sterngeschalteten unterschiedlichen Grenzwert- und Zählstufen (17, 18, 19) jeweils ausgangsseitig mit einer Meldevorrichtung (17b, 18b, 19b) und einen Auslöseglied (17a, 18a, 19a) für den Netzschalter (1) verbunden sind.

4. Überwachungseinrichtung nach Anspruch 1 oder 2, dadurch gekennzeichnet, daß zwischen der transienten Vergleichsschaltung (15) und den Grenzwert- und Zählstufen (17, 18, 19) ein zeitverzögert ansprechendes Zeitglied (16) geschaltet ist.

5. Überwachungseinrichtung nach Anspruch 1 oder 2, dadurch gekennzeichnet, daß in jedem Zwischenkreis eingangsseitig vor den elektronischen Nachbildungen (9, 10) der jeweiligen Schützlinge (2) elektronikpotentialbildende Entkopplungswandler (5, 6) angeordnet sind.

## Revendications

1. Installation de surveillance pour des dispositifs à protéger (2) fonctionnant sur un réseau en courant alternatif ou triphasé en vue d'évaleur des défauts internes dûs à des variations d'impédances, ce pourquoi il est prévu par phase (R, S, T) un circuit intermédiaire (5, 7, 9, 11, 13) alimenté par un transformateur de mesure (3, 4) et dépendant de la chute de tension aux bornes du dispositif à protéger (2), ainsi qu'un circuit intermédiaire (6, 8, 10, 12, 14) qui dépend du courant passant par le dispositif à protéger (2), en vue de filtrer des oscillations fondamentales et de transformer celles-ci en des grandeurs identiques proportionnelles à l'amplitude, avec un agencement de simulation (9; 10) du dispositif à protéger (2) dans un circuit intermédiaire, du type dans laquelle les deux circuits intermédiaires sont reliés à un régulateur non linéaire, constituant un circuit comparateur (15) transitoire et dont les grandeurs de sortie sont appliquées à plusieurs étages à valeurs de seuil et de comptages, sensibles en fonction des valeurs d'un circuit de signalisation (17b, 18b, 19b) et de déclenchement (17a, 18a, 19a) pour un interrupteur de l'alimentation (1), caractérisée par le fait que les étages à valeur de seuil et de comptage (17, 18, 19) sont, de plus, réglées de manière à répondre à des valeurs et à des directions différentes et sont montées en étoile côté entrée, en sorte qu'il est possible de saisir et d'évaluer sélectivement des défauts internes différents du dispositif à protéger (2).

2. Installation de surveillance selon la revendication 1 pour des circuits filtrants LC ou pour des batteries de condensateurs avec un nombre de branches parallèles, reliées transversalement et dont chacune est constituée par un certain nombre de condensateurs montés en série, caractérisée par le fait que dans le circuit intermédiaire (5, 7, 9, 11, 13) qui dépend de la tension est monté un agencement de simulation électronique (9) qui est susceptible d'être shunté (7b) et qui simule le circuit filtrant LC, et que dans le circuit intermédiaire (6, 8, 10, 12, 14) qui dépend du courant est monté un agencement de simulation électronique (10) qui est susceptible d'être shunté (8a) et qui simule une batterie de condensateurs, circuits électroniques de simulation dont un seul est mis en marche à la fois.

3. Installation de surveillance selon la revendication 1 ou 2, caractérisée par le fait que les différents étages à valeur de seuil et de comptage (17, 18, 19), montés en étoile, côté entrée, sont chacun reliés, côté sortie, avec un dispositif de signalisation (17b, 18b, 19b) et avec un élément de déclenchement (17a, 18a, 19a) pour l'interrupteur d'alimentation (1).

4. Installation de surveillance selon la revendication 1 ou 2, caractérisée par le fait qu'entre le circuit comparateur transitoire (15) et les étages à valeur de seuil et de comptage (17, 18, 19) est monté un élément de temporisation (16) qui répond avec un retard dans le temps.

4

5. Installation de surveillance selon la revendication 1 ou 2, caractérisée par le fait que dans chaque circuit intermédiaire sont prévus, côté entrée, et en amont des dispositifs de simulation électroniques (9, 10) des divers dispositifs à protéger (2), des transformateurs de découplage (5, 6) formateurs de potentiel par voie électronique.

**Claims**

1. Monitoring apparatus for electrical protected parts (2) operated by alternating current system or three-phase system for the evaluation of internal faults causing impedance changes, for which a respective intermediate circuit (5, 7, 9, 11, 13), fed by instrument transformer (3, 4), dependent on the voltage drop across the protected part (2), and an intermediate circuit (6, 8, 10, 12, 14) dependent on the current in the protected part (2) are provided per phase (R, S, T) for filtering out the fundamental components and transforming the same into amplitude-proportional zero-frequency quantities, with a simulating network (9; 10) of the protected part (2) in an intermediate circuit, whereby the two intermediate circuits are connected to a non-linear control system as transient comparator-circuit (15), the output quantity of which is supplied to several limiting-value and counting stages (17, 18, 19), responding in an absolute-value-dependent manner, of an indicating circuit (17b, 18b, 19b) and release circuit (17a, 18a, 19a) for a mains switch (1), characterized in that the limiting-value and counting stages (17, 18, 19) in addition are dependent on the direction of the impedance changes, more particularly the direction along the reactance axis, are set responsive to various amounts and directions and are star-connected on the input side so that various internal faults of the protected part (2) can be selectively detected and evaluated.

2. Monitoring apparatus according to claim 1 for LC filter circuits or capacitor banks with a number of parallel, cross-connected lanes of a number of capacitors lying in series respectively, characterized in that in the voltage-dependent intermediate circuit (5, 7, 9, 11, 13) there is provided an electronic simulating network (9), simulating the LC filter circuit and capable of being shunted out (7b), and in the intermediate circuit (6, 8, 10, 12, 14) dependent on the current there is provided an electronic simulating network (10) simulating the capacitor bank and capable of being shunted out (8a), of which operationally only one electronic simulating network is connected respectively.

3. Monitoring apparatus according to claim 1 or 2, characterized in that the various limiting-value and counting stages (17, 18, 19), star-connected on the input side, are connected on the output side to an indicating device (17b, 18b, 19b) and a release element (17a, 18a, 19a) for the mains switch (1) respectively.

4. Monitoring apparatus according to claim 1 or 2, characterized in that between the transient comparator circuit (15) and the limiting-value and counting stages (17, 18, 19) a time element (16) responding in a delayed manner is connected.

5. Monitoring apparatus according to claim 1 or 2, characterized in that decoupling transformers (5, 6), forming electronic potential, are arranged in each intermediate circuit on the input side before the electronic simulating networks (9, 10) of the respective protected parts (2).

FIG 1

FIG 2

FIG 3

EP 0 166 813 B1

FIG 4

3